# EUROPEAN PATENT SPECIFICATION

(11) **EP 2 628 396 B1**
(45) Date of publication and mention of the grant of the patent: **20.11.2019**
(21) Application number: 11832534.9
(22) Date of filing: 12.10.2011
(51) Int. Cl.: A23G 3/34, A23L 29/231

(54) **POWDER MIX**
PULVERMISCHUNG
MÉLANGE DE POUDRES

(30) Priority: 13.10.2010 JP 2010230623
(43) Date of publication of application: 21.08.2013
(60) Divisional application: 19196321.4
(73) Proprietor: Cargill, Incorporated, Wayzata, MN 55391 (US)
(72) Inventor: MAESHIMA, Toshikazu, Tokyo 103-0001 (JP); ASANO, Momoko, Tokyo 103-0001 (JP)
(74) Representative: Morariu Radu, Mihai Dorin
(86) International application number: PCT/JP2011/073363
(87) International publication number: WO 2012/050099

(56) References cited:
- EP-A1- 0 029 724
- WO-A1-2004/086879
- WO-A1-2005/003178
- JP-A- 8 116 890
- JP-A- 10 155 432
- US-A- 2 559 338
- US-A- 2 701 767
- US-A- 2 809 894
- US-A- 6 077 557
- US-A1- 2010 247 582
- US-B1- 6 207 194
- US-B1- 6 261 626
- EMMETT A.M.: 'A Comparison of Various Methods of obtaining Ash-Free Pectin' BIOCHEM J. vol. 20, no. 3, 1926, pages 564 - 568, XP055083039
- YUKIKO MURAKAMI: 'Basic property of readily soluble pectin and its various applications' THE FOOD INDUSTRY vol. 54, no. 18, 30 August 2011, pages 75 - 82, XP008170200

## Description

### TECHNICAL FIELD

The present invention relates to a powder mix comprising pectin that easily dissolves in cold water.

### BACKGROUND ART

Pectin is a polysaccharide thickener which is primarily extracted from citrus and the rind of apple, and is widely used in jams, acid milk beverages, dessert bases and the like as a food additive. It is described in the literature that HM pectin is soluble in cold water, while LM pectin is insoluble in cold water (Saiwai Shobo Co., Ltd., "Shokuhin Tatorui (Food Polysaccharides)", p. 63). However, in general, hot water must be used to dissolve pectin, and usually, it is necessary to heat pectin at 85° for 10 minutes or longer. Therefore, it is difficult to dissolve pectin even in the hot water obtainable from a pot at homes, and it has been considered that it is difficult to dissolve pectin in cold water.

Therefore, since it is not feasible to use pectin after dissolving it in cold water in a powder state, no product in a powder form which is used without heating pectin has been available hitherto. For example, a dessert base is a food product which primarily uses LM pectin and utilizes the property that when mixed with cold milk, LM pectin reacts with calcium in the milk and instantly forms a gel. However, since pectin is insoluble in cold water, it has been essentially necessary to have the dessert base prepared in a liquid state as a form for distribution, by dissolving the dessert base in advance in hot water.
However, there has been a demand for the development of a powder type dessert base, in view of the ease of production, storage and transportation, cost reduction resulting therefrom, convenience in mixing with milk, and the like.

Furthermore, non-heating type powder desserts are generally available, and gelatin, starch, carrageenan, sodium alginate and the like are used as gelling agents or thickening agents. However, gelatin has a problem that a cooling time is required until a gel is formed, starch has a problem that starch has a sticky food texture and does not form a perfect gel, and sodium alginate has a problem that its excessively firm food texture is not preferable. Thus, it has been contemplated that if pectin that can form a gel in a short time and has a food texture which is different from that of existing powder desserts could be used, pectin would have very high marketability.

Furthermore, in recent years, mixes for powder jellies that can be prepared only with hot water from a pot without being heated in a pan are commercially available, and there are available products that mainly use agar. However, there is no product available that uses pectin.

Furthermore, in the field of nursing care foods in recent years, modified consistency foods produced by thickening foods, or solidified supplementary foods produced by gelling foods are used as food products for dysphagic patients. However, there is no product available that uses pectin in a powder form. Further, viscosity modified foods containing pectin, which are produced by imparting viscosity to concentrated liquid foods such as enteral nutrients for the purpose of preventing regurgitation in the body or diarrhea, are also used. However, these are also liquid products, and no powder product containing pectin is available.

Under such circumstances, the inventors of the present invention conducted a research under the purpose of improving solubility of pectin. Thus, the inventors investigated related art technologies, and found the following documents.

Patent Document 1 discloses a method for producing soluble pectin, and a method for preparing an instant dessert mix using the same. According to this patent document, soluble pectin can be produced by dissolving pectin once, and powderizing the pectin again by using a soluble material such as dextrin as an excipient. However, this method requires a process of dissolving pectin repeatedly, and it is not practical in view of labor and cost. Furthermore, Patent Document 2 discloses a non-heating type powder dessert mix in which a carrageenan powder contains particles having a particle size of 30 µm to 150 µm at a proportion of 50% or more. This is a product made to rapidly dissolve when mixed with milk and to easily form a gel, by regulating the particle size. However, it is described that it is required to use not kappa-carrageenan that is not cold water-soluble, but lambda-carrageenan that is originally cold water-soluble. Therefore, the invention is not easily analogized to the use of pectin that is not cold water-soluble.

US2010/247582 discloses a method for providing a fibre-containing pectin product from a plant material.

EP0029724 discloses a single packet dry mix low methoxyl pectin composition which is convertible to an edible gel upon dissolution in cold or ambient temperature water of varying water hardness and which contains pectin, calcium compound, edible acid and buffer characterised in that the composition comprises: a) a low methoxyl pectin which has been co-dried with an amount of a buffer with a monovalent cation effective to protect the pectin from calcium ions present in the water and in the dry mix and a solubilizing amount of a readily soluble carrier; b) a slowly soluble calcium ion source in an amount sufficient for gel formation; and, c) a slowly dissolving edible acid in an amount which will provide a final pH of from about 3.5 to about 4.5 upon dissolution of the mix in water.

US6262626 discloses a method of obtaining selected fractions of pectin.

US2701767 discloses a dry powdered mixture adapted to form an edible gel upon the addition thereto of water comprising the solute obtained from an aqueous solution of: a partially demethoxylated pectin, a monovalent metal salt of a weak acid, and a monovalent metal salt of a complex acid of phosphorus; and a calcium salt of limited solubility in water coated with a water-dispersible material.

WO2005/003178 discloses a method for providing a fibre-containing pectin product from a plant material.

US2809894 discloses a dry powdered mixture adapted to form an edible gel upon the addition thereto of water comprising the solute obtained from an aqueous solution of: a partially demethoxylated pectin, sodium hexametaphosphate, and sodium citrate, said solute being composed of approximately 74% by weight of said pectin, -approximately 19% by weight of sodium hexametaphosphate and approximately 7% by weight of sodium citrate; an amount of heat-treated anhydrous mono-calcium phosphate sufficient to react with said pectin to form a gel; an amount of citric acid sufficient to impart a desired sourness taste to the gel to be formed; and sodium citrate in an amount not in excess of half the weight of said pectin.

US2559338 discloses a gel forming composition comprising particles of a low methoxyl acid pectinate capable of forming clear homogeneous gels with calcium ions and discrete particles comprising an edible water-soluble calcium salt and an edible watersoluble acid.

US6077557 discloses a method for preparing a gelled confection fortified with calcium.

WO2004/086879 discloses a protein powder composition comprising from about 3 to about 30 % pectin.

US6207194 discloses a composition comprising a dry, heat stable, pectinate.

### CITATION LIST

### PATENT DOCUMENT

Patent Document 1: JP 8-116890 A
Patent Document 2: JP 6-237711 A

### DISCLOSURE OF INVENTION

### PROBLEM TO BE SOLVED BY THE INVENTION

The present invention is defined by the present claims.

It is an object of the present invention to provide a powder mix containing soluble pectin that easily dissolves even in cold water at 5°C.

### MEANS FOR SOLVING PROBLEM

The inventors conducted thorough investigations in order to solve the problem described above, and as a result, the inventors found that pectin easily dissolves even in cold water at a temperature of 5°C or higher when the calcium content in pectin is adjusted to 500 ppm or less as measured by atomic absorption spectrophotometry, and that cold water-solubility of pectin is further increased when pectin is dissolved together with one kind or two or more kinds of sodium salts, potassium salts and magnesium salts.

Furthermore, the inventors found that a powder mix that easily dissolves in a cold aqueous medium is obtained also by using pectin which has been adjusted such that 80% or more has a particle size of 150 µm or less.

### BEST MODE(S) FOR CARRYING OUT THE INVENTION

Hereinafter, the present invention will be described in detail. Regarding the pectin to be used in the present invention, it is required to use pectin which has been adjusted such that 80% by mass or more has a particle size of 150 µm or less, and more preferably such that 90% or more has a particle size of 150 µm or less, while 60% or more has a particle size of 75 µm or less. However, when 90% or more has a particle size of 75 µm or less, powder lumps are likely to be formed; therefore, it is necessary to carry out a processing to prevent powder lumps, such as granulation.

Meanwhile, the particle size according to the present invention is a value measured by classification using sieves.

In the present invention, the term "easily dissolves" means that when a material is dissolved in water at 15°C, the solution exhibits a gel strength or viscosity that is at least 80% of that obtainable in the case of using the material after dissolving under heating. Pectin that "easily dissolves" according to the present invention will be hereinbelow referred to as "instantly dissolving pectin".

The pectin to be used in the present invention, is pectin in which the calcium concentration is adjusted to 500 ppm or less, more preferably 300 ppm or less, and even more preferably 200 ppm or less. The method for adjusting the calcium concentration is not particularly defined, but for example, desalination by means of an ion exchange resin may be used.

The pectin to be used in the present invention, is pectin in which the sodium concentration is adjusted to 5,000 ppm or more, more preferably 15,000 ppm or more, and even more preferably 20,000 ppm or more. There are no particular limitations on the method for adjusting the sodium concentration.

The pectin to be used in the present invention, is pectin in which the potassium concentration is adjusted to 5 ppm or more, more preferably 10 ppm or more, and even more preferably 100 ppm or more. There are no particular limitations on the method for adjusting the potassium concentration.

Pectin includes high methoxyl pectin (HM pectin) having a degree of esterification of 50% or more, and low methoxyl pectin (LM pectin) having a degree of esterification of 50% or less, but any of these may be used. Furthermore, in regard to the sources of the pectin to be used, citrus (lemon, lime, orange, and the like)-derived pectin, apple-derived pectin, beet-derived pectin, and the like can all be used. Also, regarding the LM pectin, any of an amide type having an amide group and a non-amide type that does not have an amide group can be used, but an amide type is more preferred.

There are no particular limitations on the sodium salt, potassium salt and magnesium salt that are used in the present invention, but in the case of food applications, it is needed to use sodium citrate; sodium phosphates such as dibasic sodium phosphate, tribasic sodium phosphate, sodium metaphosphate, sodium polyphosphate, sodium pyrophosphate, and acidic sodium pyrophosphate; potassium chloride, potassium carbonate, potassium phosphate, potassium citrate, magnesium chloride, magnesium carbonate, magnesium sulfate, magnesium oxide, magnesium stearate, trimagnesium phosphate, magnesium hydroxide and the like, which are recognized as a material capable of being used for food.

The proportion of pectin that is included in the powder mix of the present invention is not particularly limited, but it is desirable that pectin be included in an amount of addition of usually 0.01% to 5% by mass relative to the final liquid amount obtainable after mixing with a liquid. Therefore, the proportion of pectin in the powder mix may be adjusted to this range. Also, if the proportion of pectin in the powder mix is too large, powder lumps are likely to be formed when pectin is dispersed in a liquid. Therefore, the proportion of pectin that is included in the powder mix is preferably adjusted to 0.001% to 50% by mass.

In the powder mix of the present invention, any cold water-soluble agents may be used in combination as additional thickening agents and gelling agents. Furthermore, saccharides, starches, dextrin, vegetable fibers, powdered fruit juices, sweetening agents, flavors, colorants, emulsifying agents, acidulants, vitamins, calcium salts, milk, powdered fats and oils, and the like can also be appropriately selected and used. In addition, food powders such as cocoa, powdered green tea, soybean (soybean flour), black tea, and coffee; and functional materials such as powdered green vegetable juice, creatine, polyphenol, catechin, collagen peptides, glucosamine, chondroitin sulfate, and hyaluronic acid can also be added.

The powder mix of the present invention can be used by mixing with all kinds of liquid foods such as water, teas, milk, juices, isotonic beverages, fruit juices, miso soup, soups, and concentrated liquid foods, which are all at a temperature of 5°C or higher, and may also be mixed with hot water from a domestic pot. Furthermore, after mixing the powder mix with water at a temperature of 5°C or higher, an operation such as mixing the mixture with a liquid food such as milk or juice, or adding calcium or citric acid later, may also be carried out. Moreover, the powder mix may also be consumed after mixing it with a liquid and subsequently warming the mixture to an appropriate temperature in a microwave range or the like.

There are no particular limitations on the calcium salt that is mixed into the powder mix, but calcium chloride, calcium lactate, calcium sulfate, calcium citrate, calcium carbonate, dibasic calcium phosphate, tribasic calcium phosphate and the like can be appropriately used.

In order to enhance the dispersibility in liquid and to prevent powder lumps, the powder mix of the present invention is preferably granulated. In that case, if a sodium salt or a potassium salt is used as a binder, since pectin particles are coated with the sodium salt or potassium salt, dispersibility of the pectin particles is further enhanced, and a rapid reaction with calcium can be suppressed. The method of performing granulation is not particularly limited, but the method can be appropriately selected from methods such as flow forming by extrusion, flow forming by stirring, flow forming by rolling, fluidized bed granulation, flow forming by compression, and flow forming by spraying.

In addition, the powder mix of the present invention may acquire a form as a tableted tablet, and this can be used by dissolving in water or the like. Conventional tableting methods include a direct tablet production method in which a composition for tableting is directly tableted, and a wet tablet production method in which a composition for tableting is granulated and then tableted; however, any of them may be used in the present invention.

The powder mix of the present invention can be used as a viscosity adjusting agent intended for imparting viscosity, or a gelling agent intended for gelation. Furthermore, the powder mix of the present invention can be widely used in a viscosity adjusting agent for concentrated liquid foods, a gelling agent, diet foods, condiments such as sauces and dressings, baby foods, pet foods, animal feeds, and the like.

Embodiments of the present invention are as follows:
(1) A powder mix, in which the calcium content in pectin has been adjusted to 500 ppm or less; the sodium content in pectin has been adjusted to 5,000 ppm or more; and the potassium content in pectin has been adjusted to 5 ppm or more;
(4) The powder mix of (1), containing pectin that has been adjusted such that 80% by mass or more has a particle size of 150 µm or less;
(5) The powder mix described in any one of (1) or (4) (3), in which the pectin is HM pectin or LM pectin;
(6) The powder mix described in any one of (1), (4) or (5), containing one kind or two or more kinds selected from the group consisting of sodium salts, potassium salts, and magnesium salts;
(7) The powder mix of any one of (1), (4), (5) or (6), containing a calcium salt;
(8) The powder mix described in any one of (1), (4), (5), (6) or (7), which easily dissolves when mixed with a liquid food at 5°C, and exhibits viscosity or forms a gel;
(9) The powder mix of any one of (1), (4), (5), (6), (7) or (8), being further granulated;
(10) The powder mix of (9), wherein a solution of a sodium salt or a potassium salt is used as a binder in the granulation of the powder mix containing pectin;
(11) A food prepared by adding the powder mix of any one of (1), (4), (5), (6), (7), (8), (9) or (10) to a liquid food at a temperature of 5°C or higher, or adding the powder mix to water at a temperature of 5°C or higher and then mixing the mixture with a liquid food;
(12) A food containing the powder mix described in any one of (1), (4), (5), (6), (7), (8), (9) or (10);
(13) A food containing the powder mix described in any one of (1), (4), (5), (6), (7), (8), (9) or (10), in which the food is a jelly, a pudding, a cream dessert, a jam, a fruit sauce, frozen confectionery, a beverage, a dairy product, a baby food, a pet food, an animal feed, a diet food, a condiment, or a concentrated liquid food; and
(14) A viscosity regulating agent or a gelling agent for a concentrated liquid food containing the powder mix described in any one of (1), (4), (5), (6), (7), (8), (9) or (10).

### Effects of the Invention

The powder mix according to the present invention has a configuration described above, and can provide desserts and beverages, as well as products that have not been hitherto available even in the field of nursing care foods. Therefore, the powder mix of the present invention has a very high social value.

Hereinafter, Test Examples and Examples of the present invention will be described, but the present invention is not intended to be limited to these only.

### EMBODIMENTS OF THE INVENTION

Pectin C and Pectin D are comparative.

### [Test Example 1] Variance in solubility depending on calcium content

The contents of calcium contained in four kinds of pectins (pectin A, pectin B, pectin C, and pectin D) were measured by an atomic absorption spectrophotometric method. The results are presented in Table 1. Furthermore, 1 g of each of the pectins was mixed with 10 g of sugar, and the mixture was mixed under stirring with 89 g of water at 15°C for 30 seconds. The resulting mixture was left to stand for 3 minutes, and then was mixed with 100 g of milk at 10°C. The firmness of the gel was measured, and thereby cold water-solubility was calculated. The results are presented in Table 2. In regard to the firmness of the gel, the stress (torque) occurring when a sensor equipped with six pieces of blades was inserted into a gel, and the gel was rotated at a constant speed, was measured by using a rotary viscometer (Haake VT550), and the maximum value of the stress was designated as the firmness of the gel.

Here, cold water-solubility (%) is a value calculated by the formula: (firmness of a milk gel using pectin that has been dissolved in cold water/firmness of a milk gel using pectin that has been dissolved under heating) × 100.

**[Table 1]**

| | Ca content (ppm) | Na content (ppm) | K content (ppm) |
|---|---|---|---|
| Pectin A | 100 | 29000 | 200 |
| Pectin B | 110 | 10500 | 200 |
| Pectin C | 550 | 22000 | 170 |
| Pectin D | 730 | 21900 | 200 |
| Pectin E | 100 | 5700 | 210 |
| Pectin F | 130 | 15000 | 15 |
| Pectin G | 120 | 21900 | 8 |

**[Table 2]**

| | Maximum value on dissolving under heating (mPa·s) | Maximum value on dissolving at 15°C (mPa·s) | Cold water-solubility (%) |
|---|---|---|---|
| Pectin A | 108100 | 106900 | 99 |
| Pectin B | 76550 | 70920 | 93 |
| Pectin C | 109200 | 70240 | 64 |
| Pectin D | 83400 | 45300 | 54 |
| Pectin E | 92500 | 66600 | 72 |
| Pectin F | 102300 | 90020 | 88 |
| Pectin G | 75900 | 57680 | 76 |

From these results, it was found that as the calcium content is lower, cold water-solubility increases. According to these results, it is to use pectin having a calcium content adjusted to 500 ppm or less.

Furthermore, it was also found that as the sodium content and the potassium content are higher, cold water-solubility increases. From these results, it is that the sodium content in the pectin be adjusted to 5000 ppm or more, and it is to use pectin having a potassium content adjusted to 5 ppm or more.

### [Test Example 2] Variance in solubility depending on particle size

Pectin B having a calcium content of 110 ppm and pectin H having a calcium content of 620 ppm, which were both used in Test Example 1, were classified by sieving into particles having particle sizes of (1) 150 µm or larger, (2) 75 µm to 150 µm, and (3) 75 µm or less. The proportions were as indicated in Table 3.

Each of the sieved pectin powders (1), (2) and (3), and a pectin powder before sieving (4) in an amount of 1 g was mixed with 10 g of sugar, and each mixture was mixed under stirring with 89 g of water at 15°C for 30 seconds. The resulting mixture was left to stand for 3 minutes, and then was mixed with 100 g of milk at 10°C. The firmness of the gel was measured. Furthermore, 1 g of a pectin powder before sieving (5) was mixed with 10 g of sugar, and was dissolved under heating in 89 g of water. The solution was cooled to 15°C, and then was mixed with 100 g of milk at 10°C. The firmness of the gel was measured. The results for the pectin B are presented in Table 4, and the results for the pectin H are presented in Table 5.

It was found that when the pectin having a particle size of (1) 150 µm or larger was used, the maximum value of the firmness of the gel was a very low value compared with the items (2), (3) and (4), and both pectin B and pectin H hardly exhibited cold water-solubility. Furthermore, pectins of (2) and (3) having a particle size of 150 am or less respectively exhibited a maximum value of about 80% or more of the maximum value of the pectin (5) that was dissolved under heating, and thus it was found that that the pectins of (2) and (3) exhibited cold water-solubility. Furthermore, even in the case of the pectin powder before sieving (4), pectin B exhibited a maximum value of about 90%, while pectin H exhibited a maximum value of about 70%. Therefore, it is speculated that if the proportions of (2) and (3) are 80% or higher, cold water-solubility increases. Thus, it was found that pectin B having a lower calcium content exhibits higher cold water-solubility.

Accordingly, based on these results, it is preferable to use pectin having a particle size such that 80% by mass or more is 150 µm or less, and in order to exhibit a cold water-solubility of 80% or more, it is preferable to use pectin having a calcium content of 500 ppm or less.

**[Table 3]**

| | Particle size | Ratio (mass%) |
|---|---|---|
| Pectin B | (1) 150 µm < | 13.8 |
| | (2) 75-150 µm | 15.9 |
| | (3) < 75 µm | 70.3 |
| Pectin H | (1) 150 µm < | 19.5 |
| | (2) 75-150 µm | 36.3 |
| | (3) < 75 µm | 44.2 |

**[Table 4] Results of pectin B**

| Particle size | Maximum value (mPa·s) | Cold water-solubility (%) |
|---|---|---|
| (1) 150 µm < | 63290 | 56.2 |
| (2) 75-150 µm | 92580 | 82.2 |
| (3) < 75 µm | 109200 | 96.9 |
| (4) Total | 103820 | 92.2 |
| (5) Dissolved under heating | 112600 | - |

**[Table 5] Results of pectin H**

| Particle size | Maximum value (mPa·s) | Cold water-solubility (%) |
|---|---|---|
| (1) 150 µm < | 19140 | 12.7 |
| (2) 75-150 µm | 122700 | 81.3 |
| (3) < 75 µm | 119300 | 79.1 |
| (4) Total | 102400 | 67.9 |
| (5) Dissolved under heating | 150900 | - |

### [Test Example 3] Variance in solubility depending on temperature

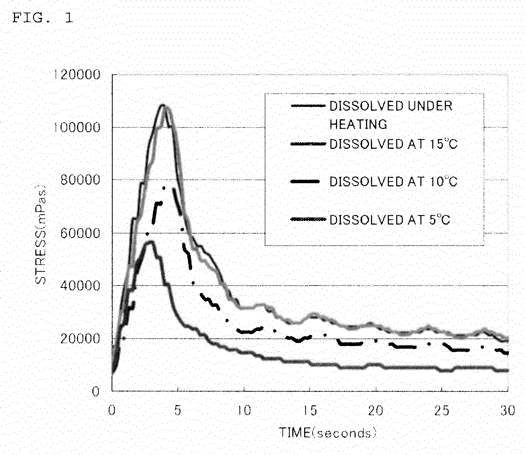

In order to verify the variance in solubility of pectin A depending on temperature, the firmness of gels was measured by the same method as that used in Test Example 1, using pectin solutions respectively stirred in water at 5°C, 10°C, and 15°C, and a pectin solution that had been dissolved under heating. The results are presented in FIG. 1 and Table 6.

**[Table 6]**

| Test plot | Maximum value (mPa·s) | Cold water-solubility (%) |
|---|---|---|
| Dissolved under heating | 108100 | - |
| Dissolved at 15°C | 106900 | 99 |
| Dissolved at 10°C | 77680 | 72 |
| Dissolved at 5°C | 56290 | 52 |

From these results, it was found that pectin that was dissolved at 15°C exhibited a cold water-solubility of nearly 100%, and that pectin exhibited a cold water-solubility of about 50% even in water at 5°C.

### [Test Example 4]

The solubility of pectin obtainable when 0 to 0.4 g of sodium citrate and 1 g of pectin A were mixed, and the mixture was dissolved in 50 g of water at 15°C, was checked. The results are presented in Table 7.

**[Table 7]**

| Sodium citrate (g) | Transparency |
|---|---|
| 0.0 | Milky white |
| 0.1 | Milky white |
| 0.2 | Milky white |
| 0.3 | Transparent |
| 0.4 | Transparent |

As the amount of sodium citrate added increased, transparency of water increased, and thus, cold water-solubility of pectin was further promoted, which was exhibited even in the case where potassium chloride was used.

### [Test Example 5]

A granulation product (1) that was granulated by using a powder containing powdered sugar in an amount of 10 times the amount of pectin A which was taken as 1 unit of mass, and by using water as a binder; and a granulation product (2) that used a sodium citrate solution, were prepared, and solubility in water at 15°C was checked. The results are presented in Table 8.

**[Table 8]**

| Test sample | Solubility immediately after mixing | Solubility after standing for 1 minute | Solubility after standing for 3 minutes |
|---|---|---|---|
| Powder | Turbid | Slightly turbid | Transparent |
| Granulation product (1) | Slightly turbid | Transparent | Transparent |
| Granulation product (2) | Transparent | Transparent | Transparent |

From these results, it was found that a granulated powder had a faster speed of dissolution in cold water, and furthermore, when sodium citrate was used as a binder, solubility further increased.

### [Example 1]

### • Preparation Example for neutral powder dessert base

A powder mix A was prepared by mixing 200 g of the instantly dissolving pectin, 400 g of a cocoa powder, and 2 kg of powdered sugar, and granulating the mixture. 26 g of this powder mix was dissolved under stirring in 100 g of water at 15°C, and the solution was mixed with the same amount of milk. Then, the mixture instantly formed a gel, so that a dessert with a chocolate taste could be produced. This dessert did not have any undissolved residue of pectin, and had a very smooth food texture. Furthermore, since this dessert does not contain any acidulant, no acid taste was felt, and the dessert had a flavor that was easy to eat even for children.

### • Preparation Example for jelly of juice

A powder mix B was prepared by mixing 1 kg of the instantly dissolving pectin, 8.67 kg of powdered sugar, 100 g of citric acid, 150 g of sodium citrate, and 80 g of calcium phosphate, and granulating the mixture. 100 g of this powder mix was mixed and dissolved in 500 g of mineral water that had been kept cold in a refrigerator. Subsequently, the solution was mixed with 500 g of orange juice that had been kept cold in the same refrigerator, and thus a jelly with an orange taste could be produced in approximately one minute.

### • Preparation Example for hydrated jelly

100 g of the powder mix B was mixed and dissolved in 500 g of mineral water that had been kept cold in a refrigerator. Subsequently, the solution was mixed with 500 g of a sports drink that had been kept cold in the same refrigerator, and thus a jelly for hydration could be produced in approximately one minute.

### • Preparation Example for viscosity adjusting agent for concentrated liquid foods

A powder mix C was prepared by mixing 300 g of the instantly dissolving pectin and 600 g of dextrin and granulating the mixture. 9 g of this powder mix was mixed and dissolved in 90 g of water at 15°C, and then the solution was mixed with 400 g of a concentrated liquid food that had been adjusted to 20°C. Then, the mixture immediately exhibited an appropriate viscosity, and the concentrated liquid food could be imparted with a viscosity.

### • Preparation Example for jelly that is prepared with only hot water from pot

A powder mix D was prepared by mixing 100 g of the instantly dissolving pectin, 200 g of powdered green tea, 10 g of calcium citrate, 5 g of sodium citrate, and 685 g of hardly digestible dextrin, and granulating the mixture. 10 g of this powder mix was mixed and dissolved in 100 g of hot water from a pot (approximately 80°C), and the solution was cooled. Thus, a green tea-flavored jelly could be produced.

### • Preparation Example for jelly that is produced by dissolving in water

A powder mix E was prepared by mixing 0.8 g of the instantly dissolving pectin, 1 g of a mango juice powder, 0.1 g of calcium sulfate, 0.05 g of acidic sodium pyrophosphate, 0.2 g of calcium citrate-coated citric acid, 0.05 g of xanthan gum (SATIAXIAN CX931 of Cargill, Inc.), 5 g of dextrin, and 0.01 g of a powder colorant. This powder mix was mixed and dissolved in 100 g of water, and thus a mango jelly that was smooth with less syneresis could be produced.

### • Preparation Example (1) for mix of powdered dressing

A powder mix F was prepared by mixing 15 g of the instantly dissolving pectin, 20 g of a vinegar powder, 1 g of sodium metaphosphate, 12.5 g of dextrin, and 1.5 g of calcium lactate. 5 g of this powder mix was mixed and dissolved in 100 g of water, and thus a gelee-like dressing could be prepared.

### • Preparation Example (2) for mix of powdered dressing

A powder mix G-1 was prepared by mixing 1 g of the instantly dissolving pectin, 2 g of a vinegar powder, and 7 g of dextrin. Furthermore, a powder mix G-2 was prepared by mixing 0.2 g of calcium lactate, 0.1 g of citric acid, 0.1 g of basil, and 0.1 g of pepper. The powder mix G-1 was dissolved in 80 g of water, and the powder mix G-2 was dissolved in 20 g of water, respectively, and the two were mixed. Thus, a jelly-like dressing could be produced instantly.

### • Preparation Example for diet shake

A powder mix H was prepared by mixing 10 g of the instantly dissolving pectin, 70 g of milk protein, 61.4 g of hardly digestible dextrin, 5 g of a strawberry juice powder, 2 g of calcium sulfate, 0.5 g of xanthan gum (SATIAXIAN CX931 of Cargill, Inc.), 0.1 g of a sweetener, and 1 g of a strawberry flavor powder. 15 g of this powder mix was mixed and dissolved in 100 g of water, and thus a diet shake having a food texture with heavy filling could be prepared. Furthermore, the powder mix was shaken by using a shaker at the time of mixing and dissolving, and the powder mix congealed in a foamed state. Thus, a mousse-like diet shake could be prepared. Also, even when the milk protein was changed to soybean protein or collagen peptides, the same diet shake could be prepared.

### • Preparation Example for baby food

A powder mix I was prepared by mixing 1.2 g of the instantly dissolving pectin, 5 g of a pumpkin powder, 7.1 g of dextrin, 1.5 g of sugar, and 0.2 g of calcium sulfate. When this powder mix was mixed and dissolved in hot water or ordinary water, a pumpkin paste intended for weaning food could be prepared. Since this pumpkin paste gelled at about 50°C, the pumpkin paste had appropriate shape retentivity even at a slightly warm temperature needed at the time of eating.

### • Preparation Example for pet food

A powder mix J for pet food containing 10 g of the instantly dissolving pectin, 2 g of calcium lactate, 60 g of corn, 10 g of soybean meal, 20 g of a meat powder, and 10 g of a vitamin/mineral mix was prepared. When hot water or ordinary water was added to this powder mix, and the powder mix was mixed and dissolved, a paste-like pet food could be prepared. This pet food was soft but had appropriate shape retentivity. Thus, the pet food had highly appropriate properties even for puppies or old dogs that cannot eat hard type pet foods.

Furthermore, 10 g of water was added to the powder mix J, and the mixture was submitted to a twin-screw extruder. The mixture was extruded into a spherical shape having a diameter of 9.2 mm at a temperature of 140°C and dried at 120°C, and thus pet food grains were obtained. These pet food grains were swollen by adding hot water or ordinary water, and then were mixed. Thus, a paste-like pet food could be prepared.

### • Powdered mix for custard cream

A powder mix K was prepared by mixing 25 g of sugar, 14.5 g of skimmed milk powder, 5 g of creaming powder, 1.5 g of egg yolk powder, 1 g of the instantly dissolving pectin, 0.3 g of a flavor powder, and 0.2 g of a colorant. This powder mix was added to 100 g of water, and the mixture was sufficiently dissolved to froth up. Thus, a custard cream having shape retentivity even at room temperature could be prepared.

### • Mix for instant jam

A powder mix L was prepared by mixing 13.5 g of sugar and 1.5 g of the instantly dissolving pectin. When this powder mix was dissolved in 40 g of water, and subsequently the mixture was mixed with 100 g of a strawberry puree, a strawberry jam could be prepared instantly. Since this method does not require heating, a jam with a low sugar content can be prepared, and the fresh feeling of fruits is maintained. Thus, a jam with an excellent flavor can be prepared.

### • Frozen dessert

A powder mix M was prepared by mixing 200 g of powdered starch syrup, 20 g of the instantly dissolving pectin, 3 g of a flavor powder, 2 g of a colorant powder, and 75 g of dextrin. This powder mix was dissolved in 2000 g of water, and the solution was poured into an ice candy mold and frozen. Thus, a frozen dessert in a sherbet form could be obtained. This frozen dessert did not become too firm since the formation of ice crystals was inhibited by pectin, and had appropriate properties for consumption.

### • Jelly for confectionery topping

A powder mix N was prepared by mixing 426 g of sugar, 15 g of the instantly dissolving pectin, 5 g of citric acid, and 4 g of sodium pyrophosphate. This powder mix was mixed and dissolved in 1000 g of hot water at 60°C, and the mixture was cooled to room temperature. Thus, a jelly for confectionery topping was prepared. When this jelly for topping was used on the surface of cakes, the jelly exhibited appropriate fluidity when stirred and applied, and after application, the jelly could give transparency and gloss to the cake surface.

## Claims

1. A powder mix comprising pectin with a calcium content adjusted to 500 ppm or less, with a sodium content adjusted to 5000 ppm or more and with a potassium content adjusted to 5 ppm or more.

2. The powder mix according to claim 1 comprising pectin, which has been adjusted such that 80% by mass or more has a particle size of 150 µm or less.

3. The powder mix according to any one of claims 1 or 2, wherein the pectin is HM pectin or LM pectin.

4. The powder mix according to any one of claims 1 to 3, comprising one kind or two or more kinds selected from the group consisting of sodium salts, potassium salts, and magnesium salts.

5. The powder mix according to any one of claims 1 to 4, comprising a calcium salt.

6. The powder mix according to any one of claims 1 to 5, being further granulated.

7. The powder mix according to claim 6, wherein a solution of a sodium salt or potassium salt is used as a binder in the granulation of the powder mix containing pectin.

8. A food prepared by adding the powder mix according to any one of claims 1 to 7 to a liquid food at a temperature of 5°C or higher, or adding the powder mix to water at a temperature of 5°C or higher and then mixing the mixture with a liquid food.

9. A food comprising the powder mix according to any one of claims 1 to 7

10. A food comprising the powder mix according to any one of claims 1 to 7, wherein the food is a jelly, a pudding, a cream dessert, a jam, a fruit sauce, a jelly for confectionary topping, frozen confectionary, a beverage, a dairy product, a baby food, a pet food, an animal feed, a diet food, a condiment, or a concentrated liquid food.

11. A viscosity regulating agent or a gelling agent for a concentrated liquid food comprising the powder mix according to any one of claims 1 to 7.

## Patentansprüche

1. Pulvermischung, umfassend Pektin mit einem Kalziumgehalt, der auf 500 ppm oder weniger eingestellt ist, mit einem Natriumgehalt, der auf 5000 ppm oder mehr eingestellt ist, und mit einem Kaliumgehalt, der auf 5 ppm oder mehr eingestellt ist.

2. Pulvermischung nach Anspruch 1, umfassend Pektin, das eingestellt wurde, sodass 80 Gew.-% oder mehr eine Partikelgröße von 150 µm oder weniger aufweist.

3. Pulvermischung nach einem der Ansprüche 1 oder 2, wobei das Pektin HM-Pektin oder LM-Pektin ist.

4. Pulvermischung nach einem der Ansprüche 1 bis 3, umfassend eine Art oder zwei oder mehrere Arten, ausgewählt aus der Gruppe bestehend aus Natriumsalzen, Kaliumsalzen und Magnesiumsalzen.

5. Pulvermischung nach einem der Ansprüche 1 bis 4, umfassend ein Kalziumsalz.

6. Pulvermischung nach einem der Ansprüche 1 bis 5, die weiter granuliert ist.

7. Pulvermischung nach Anspruch 6, wobei eine Lösung eines Natriumsalzes oder Kaliumsalzes als ein Bindemittel bei der Granulierung der pektinhaltigen Pulvermischung verwendet wird.

8. Nahrungsmittel, das durch Zugabe der Pulvermischung nach einem der Ansprüche 1 bis 7 zu einem flüssigen Nahrungsmittel bei einer Temperatur von 5 °C oder höher, oder durch Zugabe der Pulvermischung zu Wasser bei einer Temperatur von 5 °C oder höher und dann Mischen des Gemischs mit einem flüssigen Nahrungsmittel zubereitet wird.

9. Nahrungsmittel, umfassend die Pulvermischung nach einem der Ansprüche 1 bis 7.

10. Nahrungsmittel, umfassend die Pulvermischung nach einem der Ansprüche 1 bis 7, wobei das Nahrungsmittel ein Gelee, ein Pudding, ein Creme-Dessert, eine Konfitüre, eine Fruchtsauce, ein Gelee für Süßwarenüberzug, gefrorene Süßwaren, ein Getränk, ein Molkereiprodukt, ein Babynahrungsmittel, ein Haustiernahrungsmittel, ein Tierfutter, ein Diätnahrungsmittel, ein Würzmittel oder ein konzentriertes flüssiges Nahrungsmittel ist.

11. Viskositätsregulierendes Mittel oder Geliermittel für ein konzentriertes flüssiges Nahrungsmittel, umfassend die Pulvermischung nach einem der Ansprüche 1 bis 7.

## Revendications

1. Mélange de poudres comprenant de la pectine avec une teneur en calcium ajustée à 500 ppm ou moins, avec une teneur en sodium ajustée à 5 000 ppm ou plus et avec une teneur en potassium ajustée à 5 ppm ou plus.

2. Mélange de poudres selon la revendication 1, comprenant de la pectine, qui a été ajustée de sorte que 80% en masse ou plus aient une taille particulaire de 150 µm ou moins.

3. Mélange de poudres selon l'une quelconque des revendications 1 ou 2, dans lequel la pectine une pectine HM ou une pectine LM.

4. Mélange de poudres selon l'une quelconque des revendications 1 à 3, comprenant un type ou deux ou plus de types sélectionnés parmi le groupe constitué par des sels de sodium, des sels de potassium et des sels de magnésium.

5. Mélange de poudres selon l'une quelconque des revendications 1 à 4, comprenant un sel de calcium.

6. Mélange de poudres selon l'une quelconque des revendications 1 à 5, granulé en plus.

7. Mélange de poudres selon la revendication 6, dans lequel une solution d'un sel de sodium ou d'un sel de potassium est utilisée comme liant dans la granulation du mélange de poudres contenant de la pectine.

8. Aliment préparé en ajoutant le mélange de poudres selon l'une quelconque des revendications 1 à 7 à un aliment liquide à une température de 5 °C ou plus ou en ajoutant le mélange de poudres à de l'eau à une température de 5 °C ou plus et en mélangeant ensuite le mélange à un aliment liquide.

9. Aliment comprenant le mélange de poudres selon l'une quelconque des revendications 1 à 7.

10. Aliment comprenant le mélange de poudres selon l'une quelconque des revendications 1 à 7, dans lequel l'aliment est une gelée, un pudding, un dessert à la crème, une confiture, une sauce aux fruits, une gelée pour garniture de confiserie, une confiserie glacée, une boisson, un produit laitier, un aliment pour bébé, de la nourriture pour animaux de compagnie, de la nourriture pour animaux, un aliment de régime, un condiment ou un aliment liquide concentré.

11. Agent régulateur de viscosité ou agent gélifiant pour un aliment liquide concentré comprenant le mélange de poudres selon l'une quelconque des revendications 1 à 7.
